# EUROPEAN PATENT SPECIFICATION

(11) **EP 1 529 985 B1**
(45) Date of publication and mention of the grant of the patent: **15.10.2008**
(21) Application number: 03025263.9
(22) Date of filing: 06.11.2003
(51) Int. Cl.: F16H 7/18, F16H 9/18

(54) **Method for operating a continuously variable transmission**
Verfahren zum Betrieb einer stufenlosen Getriebevorrichtung
Procédé pour faire fonctionner une transmission à variation continue

(43) Date of publication of application: 11.05.2005
(73) Proprietor: ROBERT BOSCH GMBH, 70442 Stuttgart (DE)
(72) Inventor: Van Spijk, Johannes Gerardus Ludovicus Maria, 5151 BM Drunen (NL)

(56) References cited:
- EP-A- 0 280 365
- EP-A- 0 626 526
- EP-A- 1 167 829
- DE-A- 10 203 941
- US-B1- 6 435 994
- PATENT ABSTRACTS OF JAPAN vol. 2003, no. 02, 5 February 2003 (2003-02-05) & JP 2002 295614 A (NISSAN MOTOR CO LTD), 9 October 2002 (2002-10-09)

## Description

The present invention relates to a method for operating a continuously variable transmission incorporating a push-type drive belt, as defined in the preamble of claim 1.

Such transmissions are generally known, e.g. from European patent application EP-A-1167829 in the name of Applicant, Such transmissions are used to the extent that for a given range of transmission ratios, i.e. the ratio coverage, of the transmission the throughput of driving power per unit of mass and/or volume of the transmission is optimised. Various manners of accomplishing this goal exist, often requiring extensive research and significant redesign of the transmission or a pulley component thereof. It is therefore a goal of the current invention to realise the same in a cost effective, relatively simple manner, wherever possible without requiring principal changes within existing transmission designs.

In accordance with the invention, this goal is realised by applying the measures as provided by the characterising portion of claim 1 and involving guiding means for guiding the tensile means of the push-type drive belt, so as to allow it to run at least partly outside the circumference of the pulley. With the presence of such guiding means, posing a boundary in an axial direction for the tensile means thereby defining an ultimate axial running position of the tensile means with respect to the transverse elements within the belt, it is made possible to allow the tensile means of the belt to be at least partly located in a radial position beyond the radial extent of a pulley disc. This effect renders possible a significant increase of the ratio coverage of the transmission, without significantly increasing the weight thereof and without requiring a principal redesign thereof. Advantageously, the guiding means needs only locally be present and is therefore lightweight, and relatively inexpensive. A further advantage of this design according to the invention includes that instead of increasing the ratio coverage of a particular transmission, alternatively its efficiency may be increased by decreasing the rotating mass of the pulleys, while maintaining identical ratio coverage. Also the distance between the pulleys may in this way be decreased favourably.

It is remarked that from US-B1-6,435,994 which is considered as the closest prior art document there is known an elongated guide rail extending between the transmission pulleys that at least partly encloses a torque transfer means of the transmission such as a link chain or flexible belt, which guide rail is designed and provided to limit transverse motion, i.e. vibration of the said means. Provided that the design and installation requirements according to the present invention are incorporated therein, this known guide rail could also serve as the guiding means in the method according to the present invention.

The invention will now by way of example be elucidated further along a drawing in which:
figure 1 is a schematic representation of a continuously variable transmission including a drive belt to which the present invention relates;
figure 2 indicates a section of the belt in perspective;
figure 3 in an axial and radial cross section represents the prior art transmission part including pulley and the belt, the latter being represented in an ultimate radial position during operation;
figure 4 in a view in accordance with figure 2, represents a novel transmission part in which a measure according to the invention is represented by a number of embodiments of a guiding means added to the transmission;
figure 5 in a schematic side elevation of a transmission represents both the effect of the measure and means according to the invention and a further embodiment of the guiding means;
figure 6 represents a view in longitudinal direction of the belt of a transverse element thereof that is provided with pulley contacting faces that are curved in the radial direction; and
figure 7 represents the ultimate radial position during operation of a belt having the feature of figure 6 when fitted in the transmission according to the invention

In the figures, identical reference numbers relate to identical or at least comparable technical features.

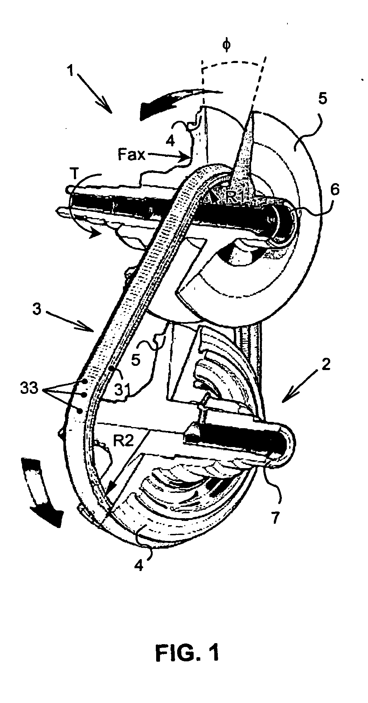

Figure 1 shows the central parts of a known continuously variable transmission that is commonly applied in the drive-line of motor vehicles between the engine and the drive wheels thereof. The transmission comprises two pulleys 1, 2, each provided with two pulley discs 4, 5, between which a push-type drive belt 3 is present for transmitting a rotational movement and an accompanying torque from the one pulley 1, 2 to the other 2, 1. The pulley discs 4 and 5 are generally shaped conical and at least one pulley disc 4 is incorporated in the transmission axially moveable along a respective pulley shaft 6, 7 over which it is placed. The transmission generally also comprises activation means that impose on the said at least one disc 4 an axially oriented clamping force Fax directed towards the respective other pulley disc 5 such that the belt 3 is clamped there between.

The belt 3 comprises an endless tensile means 31 and a multitude of plate-like transverse elements 33 that are provided on the tensile means 31 movable along its longitudinal direction and oriented predominantly transversely thereto. The elements 33 take-up the clamping force Fax, such that at rotation of a driving pulley 1, friction between the discs 4, 5 and the belt 3, causes the elements 33 to be thrust from the driving pulley 1 to the driven pulley 2 and back again, thereby being guided and supported by the tensile means 31. A transmission ratio of the transmission is thereby determined and defined by the quotient of the effective contact radius R2 of the belt 3 at the driven pulley 2 and the effective contact radius R1 of the belt 3 at the driving pulley 1. Such transmission ratio may vary continuously in a range of transmission ratios in dependence on certain operating conditions of the transmission, typically between a largest value of around 2.3, which is commonly denoted the Low transmission state, and a smallest value of around 0.45, which is commonly denoted the Overdrive transmission state. Hereby, a ratio coverage RC of the transmission is defined as the quotient between these largest and smallest values, i.e. having a typical value of around 5.

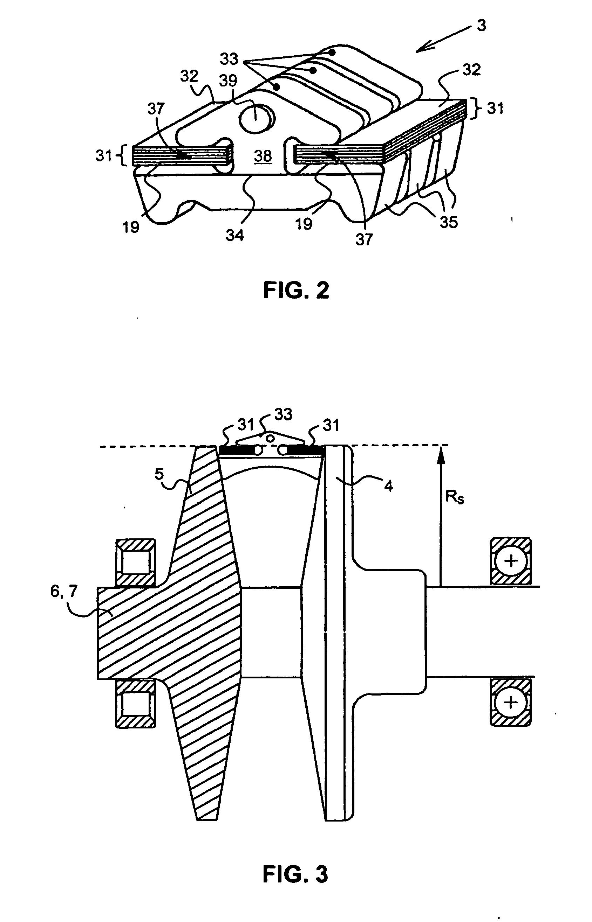

Figure 2, in a perspective view, shows a section of the belt 3 indicating a two part tensile means 31 and a number of transverse elements 33, which belt 3 is described in more detail in, for example, the European patent publication EP-A-0626526. The transverse elements 33 are provided with lateral side or pulley contact faces 35 that during operation are clamped between and arrive into frictional contact with the discs 4, 5 of the driving and driven pulleys 1, 2 respectively. In this prior art design, these faces 35 are designed straight, i.e. flat. For allowing a mutual rocking of the elements 33 about a generally axially oriented line of contact between two adjacent elements 33 in a bent trajectory part of the belt 3, they are provided with a so-called rocking edge 34 on their respective front principle faces 38, which edge 34 defines an axially oriented, sharp or slightly rounded edge between two sections of the front principle face 38 that are mutually oriented at a small but notional angle. The elements 33 are further provided with a projection 39 protruding from the front principle face 38 thereof, for interaction with a complementary hole provided in a back principle face thereof. Figure 2 also indicates that the elements 33 are provided with two predominantly transversely extending recesses 37 that open up in an axially outward direction and that are each associated with a bearing surface 19 of the element 33 for accommodating and contacting at least part of the tensile means 31.

Figure 3 illustrates a state of the art effect, implemented using the above-described belt 3. One, in casu axially fixed pulley disc 5 is together with the belt 3 and respective bearings for the respective pulley shaft 6, 7 depicted in cross section. It is shown therein that during operation an ultimate radial position of the belt 3 and thereby the said effective contact radii R1 and R2 are defined such that the tensile means 31 are at all times guided in the axial direction by the pulley discs 4, 5 imposing an ultimate axial position thereon, whereby the tensile means 31 and the transverse elements 33 are mutually kept together.

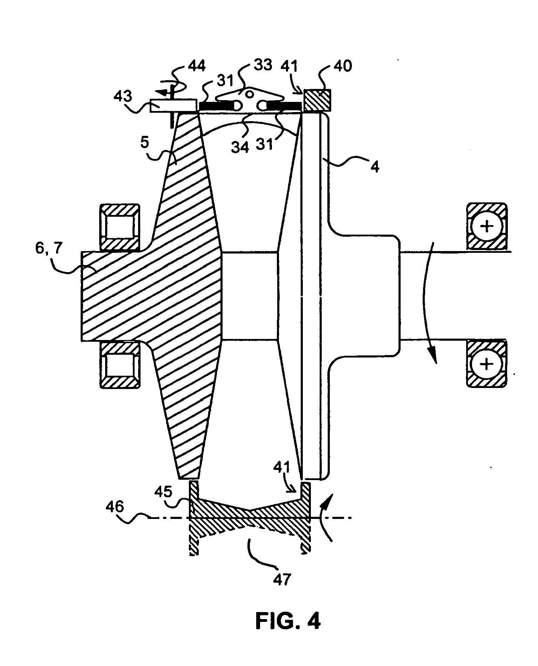

Figure 4 illustrates the basic idea according to the invention, namely to extend the ultimate radial position of the belt 3 and therewith the ratio coverage of the transmission without increasing the radial dimension of the pulley discs 4, 5. This may according to the invention be done relatively cheaply by incorporating additional guiding means 40, 43, 45, 48 in the transmission that acts on the tensile means 31 of the belt 3 in the axial direction whenever it should unintentionally leave or tend to leave its optimal functional position in relation to the respective bearing surfaces 19 within the respective recesses 37, thereby imposing the ultimate axial position thereon. The external means 40, 43, 45, 48, added in accordance with the basic idea according to the invention, are incorporated such that the tensile means 31 may be allowed to extend radially beyond the circumference, i.e. beyond the radial dimension of a pulley 1, 2, without it running the risk of leaving the respective recess 37. Preferably, the guiding means 40, 43, 45, 48 is provided separate form the pulleys 1, 2 and has a fixed position within the housing of the transmission that encompasses the pulleys 1, 2 and the belt 3.

In accordance with a further aspect of the invention, the guiding means 40, 43, 45, 48 is preferably made in a metal material or a wear and pressure resistant synthetic material.

The guiding means 40, 43, 45, 48 according to the invention thus takes over the relevant function of the pulley discs 4, 5, namely preventing the tensile means 31 from leaving the axially open recesses 37 in a predominantly axial direction, thereby acting on the tensile means 31 when it would be inclined to do so for whatever reason or effect. By such take over of function, it is in accordance with the invention made possible for the belt 3 to assume a more extreme ultimate radial position between the discs 4, 5 of a pulley 1, 2 compared with that in the known transmission, whereby such radial position may be increased at least by a height of the recesses 37 in the radial direction. Hereby, also a maximum value of the said effective contact radius R2, the largest and smallest value for the transmission ratio and the transmission ratio coverage are favourably increased accordingly. In this manner the bearing surfaces 19 of the elements 33 will be positioned essentially flush with the outer circumference of a pulley 1, 2.

Several particular embodiments of the guiding means 40, 43, 45, 48 will be illustrated along the figures 4 to 7, as well as the amount of transmission ratio coverage that may be favourably gained thereby. It is remarked that given the nature and function of the guiding means 40, 43, 45, 48, this could also have been denoted delimiting means since it delimits the, in casu axial, position of the tensile means 31 within the transmission and, more in particular, within the belt 3.

It is remarked that normally the tensile means 31 will remain running or at least will be strongly urged to run in a position centralised over the bearing surface 19 of the elements 33, so that no, at least no severe contact will take place between the tensile means 31 and the guiding means 40, 43, 45, 48. Still, when, for whatever reason, the tensile means 31 leaves or is inclined to leave its normal axial position during operation, it should be delimited in its movement, for which reason the guiding means 40, 43, 45, 48 is provided for by the current invention.

Figure 4 schematically reflects three principal solutions that embody the idea according to the invention and enable further imagination of the manner in which this may be set into practice. At the right hand side of figure 4 in association with the axially moveable disc 4, the most straightforward manner of realising the guiding means 40, 43, 45, 48 is reflected by a block element 40 that represented in cross section. It is located immediately adjacent the foreseen ultimate radial position of the belt 3 in its ultimate radial position just outside the circumference of the respective pulley disc 4. A tensile means contact face 41 of the block element 40 preferably extends to a limited extent both in tangential and radial direction for optimally guiding and delimiting the tensile means 31. In this embodiment the guiding means 40 would preferably include at least one block element 40 positioned at each side of the belt 3 adjacent each of the pulley discs 4 ,5 of each of the pulleys. The location thereof along the circumference of a pulley disc 4, 5 is preferably located in the near vicinity of the point of entry of the belt 3 in the respective pulley 1, 2, but should of course at least enable the guiding means 40, 43, 45 to contact the tensile means 31.

At the left-hand side of figure 4 in associated with the axially fixed disc 5, a second embodiment 43 of the guiding means 40, 43, 45, 48 is illustrated in the form of a wheel element 43 that is rotatably born by a shaft 44. This latter wheel element 43 is favourable in that during contact with the tensile means 31 a friction there between may be minimal.

A third embodiment 45 of the guiding means 40, 43, 45, 48 is also shown in figure 4 in cross-section. It may be incorporated either as a static means or rotatably born by a shaft 46. In this third embodiment the guiding means 40, 43, 45, 48 are shaped as a dome element 45 that is relatively easy to produce and has logistic and mounting advantages. Like the earlier described first and second embodiments 40, 43 of the guiding means 40, 43, 45, 48, it is also provided with a tensile means contact face 41. The dome-like internal shape 47 of the dome element 45 as indicated in the figure 4 is intended for accommodating the transverse elements 33 of the belt 3 and, possibly, defining an ultimate radial position thereof. Also, this design has the advantage that it may be provided axially moveable, whereby the interaction with the elements 33 imposes an optimum axial position on this particular embodiment of the guiding means 45. In case of a rotational design thereof, the dome element 45 is may be drivingly engaged by a pulley 1, 2, e.g. by the provision of mutually engaging teeth provided on the guiding means 45 and on the circumference of at least one pulley disc 4, 5, or by the transverse elements 33 of the belt 3, e.g. by means of a sliding contact there between.

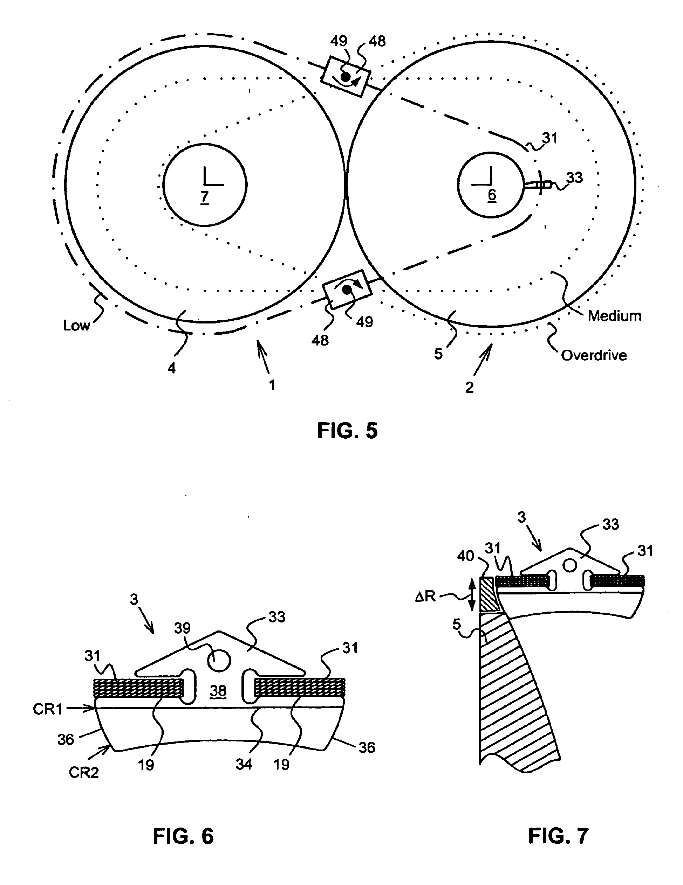

Figure 5 amongst others illustrates in a forth embodiment of the guiding means 40, 43, 45, 48 that it may also be located near a belt 3 in a straight part of its trajectory in between the pulleys 1, 2. At such location the guide means could again be designed as a block positioned adjacent to the belt 3 at the location of the tensile means 31 thereof, but could also comprise a fully or partly closed channel 48 through which the belt 3 runs. Preferably, this type of guiding means 48 automatically changes its orientation with that of the belt, e.g. by a rotation about a shaft 49 as indicated by the arrow. Figure 5 further, by dotted and broken lines indicates the radial position of the tensile means 31 in the above-mentioned Low and Overdrive transmission states, such position thus being located radially outside the circumference of one of the pulley discs 4, 5 in accordance with the invention. Figure 5 also illustrates an intermediate transmission state, here-denoted Medium. One advantage of this fourth embodiment over the first three embodiments is that no additional radial space is required to accommodate this embodiment of the guiding means 48, because it is provided in between the pulleys 1, 2 associated with the belt 3 in a straight trajectory part thereof, rather than at the circumference of a pulley 1, 2 associated with the belt 3 in a curved trajectory part thereof.

In a further development of the invention, any embodiment of the guiding means 40, 43, 45, 48 may be incorporated axially displaceable in the transmission, e.g. in dependence of the axial position of the relevant axially moveable disc 4 or that of the belt 3 itself. Thereto the means can for example be favourably linked to a pulley disc 4, 5 at least in the axial direction. The means may than in accordance with the invention have a special surface intended for contact with the pulley disc 4, 5, which surface is preferably supplied with oil for the purpose of lubrication or cooling. Alternatively or in addition to such dependency, it may also be actively urged towards the belt 3 biased by for example a spring. Such axial displaceability of the guiding means 40, 43, 45, 48 being advantageous because the axial position of the belt 3 and thus also of tensile means 31 varies with the effective contact radius R1, R2 thereof, because of the conical shape of the pulley discs 4, 5. Moreover, in such axially displaceable embodiment the means may automatically adapt for an actual tolerance resulting from a set of tolerances allowed at assembly of a transmission, and that it adapts for axial deflection, i.e. deformation, of the discs 4, 5 under the influence of relatively high clamping forces.

Figure 6 illustrates a different kind of transverse element 33, by the use of which maximum profit of the idea according to the invention may be realised. This type of transverse element 33 is designed with pulley contact faces 36 that curved in the radial direction and that is intended to co-operated with pulley discs 55 that are also curved in the radial direction as indicated in the same figure. By this design, the elements 33 will contact the discs 55 at a defined radial point of contact CR1, CR2 on such curved contact face 36, rather than over its full radial dimension as was the case with the transverse elements 33 having a straight pulley contact face 35, as mentioned in the above and depicted in figure 3. Hereby, such radial point of contact CR1, CR2 varies with the effective contact radius R1, R2 of the belt 3, whereby such point CR2 is located near or at the radial bottom of the curved contact face 36 at the maximum value of the effective contact radius R2. In this embodiment the bearing surfaces 19 can thus be positioned radially beyond the circumference of the pulley disc 55 such that the relative increase ΔR of the ultimate radial position of the belt 3 may exceed the radial dimension of the recesses 37 without adverse effect, as long as the maximum effective contact radius R2 is at most equal to the radial dimension of the pulley disc 55, rendering the situation depicted in figure 7. In this configuration the maximum value for the effective contact radii R2 may in practice in many applications be extended by an amount ΔR of around 5 mm. Typically, with R1 and R1 varying between 31 and 75 mm in the conventional transmission, this boils down to a highly significant increase in ratio coverage RC of the transmission according to the invention of almost 15%, i.e. for example conventional RC=(70/31)²= 4.8 and improved RC=([70+5]/31)²= 5.5.

The invention apart from the preceding description and all the details from the pertaining figures as may readily and unambiguously be derived by a person skilled in the art, further relates to all principals and details as provided by the definitions within the following set of claims.

## Claims

1. Method for operating a continuously variable transmission provided with a push-type drive belt (3) comprising a plurality of transverse elements (33) moveable along an endless tensile means (31) of the belt (3), whereby the transverse elements (33) are each provided with at least one axially open recess (37) at least partly defined by a bearing surface (19) of the elements (33) for accommodating the endless tensile means (31), and with a set of pulleys (1, 2), each comprising two pulley discs (4, 5) at least one (4) of which is axially moveable along a shaft (6, 7) of the respective pulley (1, 2), wherein pulley contact faces (35) of the transverse elements (33) that are located on either side thereof radially inward from the bearing surfaces (19) are clamped between the discs (4, 5) of the pulleys (1, 2) and wherein radial positions of the belt (3) with respect to the discs (4, 5) of the pulleys (1, 2) are varied in dependence on operating conditions of the transmission, **characterised in that**, the said radial positions include a radial position wherein the endless tensile means (31) of the belt (3) is at least partly located beyond a radial extent of a disc (4, 5) of a respective pulley (1, 2), whereby the transmission is provided with guiding means (40; 43; 45; 48) that define an ultimate axial position of the tensile means (31) with respect to the bearing surface (19) in the such radial position.

## Patentansprüche

1. verfahren zum Betrieb eines stufenlosen Getriebes, das mit einem Schubtreibriemen (3) mit mehreren Querelementen (33), die entlang einem Endloszugmittel (31) des Riemens (3) beweglich sind, wobei die Querelemente (33) jeweils mit mindestens einer axial offenen Aussparung (37) versehen sind, die zumindest teilweise durch eine Lagerfläche (19) der Elemente (33) zur Aufnahme des Endloszugmittels (31) definiert wird, und mit einem Satz von Rollen (1, 2) versehen ist, die jeweils zwei Rollenscheiben (4, 5) umfassen, von denen mindestens eine (4) entlang einer welle (6, 7) der jeweiligen Rolle (1, 2) axial verschiebbar ist, wobei Rollenkontaktflächen (35) der Querelemente (33), die sich auf einer Seite davon radial einwärts der Lagerflächen (19) befinden, zwischen den Scheiben (4, 5) der Rollen (1, 2) eingeklemmt sind, und wobei radiale Positionen des Riemens (3) bezüglich der Scheiben (4, 5) der Rollen (1, 2) in Abhängigkeit von Betriebsbedingungen des Getriebes geändert werden, **dadurch gekennzeichnet, dass** die radialen Positionen eine radiale Position umfassen, in der sich das Endloszugmittel (31) des Riemens (3) zumindest teilweise hinter einer radialen Erstreckung einer Scheibe (4, 5) einer jeweiligen Rolle (1, 2) befindet, wobei das Getriebe mit Führungsmitteln (40; 43; 45; 48) versehen ist, die eine axiale Endposition des Zugmittels (31) bezüglich der Lagerfläche (19) in einer solchen radialen Position definieren.

## Revendications

1. Procédé d'exploitation d'une transmission à variation continue pourvue d'une courroie (3) d'entraînement à poussée comportant une pluralité d'éléments transversaux (33) mobiles le long d'un moyen (31) de traction sans fin de la courroie (3), les éléments transversaux (33) étant pourvus chacun d'au moins un évidement (37) s'ouvrant axialement, au moins partiellement défini par une surface (19) d'appui des éléments (33) en vue de loger le moyen (31) de traction sans fin, et d'un jeu de poulies (1, 2) comportant chacune deux disques (4, 5) de poulie, au moins l'un (4) de ceux-ci étant mobile axialement le long d'un arbre (6, 7) de la poulie (1, 2) correspondante, les faces (35) de contact avec les poulies des éléments transversaux (33), situées de part et d'autre de ceux-ci radialement en-deçà des surfaces (19) d'appui, étant pincées entre les disques (4, 5) des poulies (1, 2) et des positions radiales de la courroie (3) par rapport aux disques (4, 5) étant soumises à des variations en fonction des conditions de fonctionnement de la transmission, **caractérisé en ce que** lesdites positions radiales comprennent une position radiale dans laquelle le moyen (31) de traction sans fin de la courroie (3) est au moins partiellement situé au-delà d'une étendue radiale d'un disque (4, 5) d'une poulie (1, 2) correspondante, la transmission étant pourvue de moyens (90 ; 93 ; 95 ; 48) de guidage qui définissant une position axiale extrême du moyen (31) de traction par rapport à la surface (19) d'appui dans ladite position radiale.
